# EUROPEAN PATENT APPLICATION

(11) **EP 1 640 877 A1**
(43) Date of publication of application: **29.03.2006**
(21) Application number: 04104471.0
(22) Date of filing: 15.09.2004
(51) Int. Cl.: G06F 17/30

(54) **Method for scaling images for usage on a mobile communication device**

(71) Applicant: Research In Motion Limited, Waterloo, Ontario N2L 3W8 (CA)
(72) Inventor: Sylthe, Olav A., Atlanta, Georgia 30338 (US); Bocking, Andrew D., Waterloo, Ontario N2K 3Y8 (CA); Knowles, Michael, Waterloo, Ontario N2T 2X5 (CA)
(74) Representative: Rickard, David John

(57) **Abstract**

A process is set forth for scaling images recieved as email attachments, or accesible by a URL link, to fit the device screen of a mobile communication device. A user menu prompt is presented for allowing the user to save the image for subsequent reuse by other device applications such as screensavers, background image useage, or picture viewers, without these device applications having to synchronize with a desktop computer to obtain the image.

## Description

The following is directed in general to displaying content on mobile communication devices, and more particularly to a method for scaling images from email attachments and web sites for viewing, saving and reuse by various applications.on a mobile communication device.

### Background of the Invention

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones. While their reduced size is an advantage to portability, limitations in download bandwidth and device screen size give rise to challenges in viewing large images.

In particular, large images rarely fit perfectly on a mobile communication device having limited display real estate without resorting to a device-side application to resize and adjust the colors of the image. Such applications are very CPU/memory intensive to execute on the device. Alternatively, images must be manipulated beforehand on a desktop computer in order to fit the intended device screen.

Furthermore, in order to view or allow reuse of an image by various applications running on the mobile communication device, the image needs to be downloaded onto the device either via a wired or wireless close proximity synchronized connection to a PC, or over a bandwidth constrained wireless connection. For the latter, such as wireless retrieval of an image attachment in an email, the physical image size is an important limiting factor due to the cost of bandwidth usage and time required downloading the attachment to the device.

Some wireless devices allow wireless download or synchronization of the entire image file onto the device, for use by device applications. However, no resizing of the image is accommodated in such prior art systems prior to download/synchronization.

### Summary of the Invention

According to an aspect of the invention, a method is provided for scaling images recieved as email attachments, or accesible by a URL link, to fit the device screen of a mobile communication device. Furthermore, the invention allows reuse of such viewed images aquired wirelessly by saving the images on the device. The saved images can subsequently be used by other device applications such as screensavers, background image useage, or picture viewers, without these device applications having to synchronize with a desktop computer to obtain the image.

The method of the invention differs from the prior art in that it relates to wireless image retrieval and image resizing by the server to fit the requesting device. Accordingly, subsequent device usage therefore needs no prior scaling or color reduction, thereby limiting device CPU/memory/storage usage.

The method of the invention is implemented using both device and server side functionality to allow a user of a wireless device to quickly view an image on the device either as an attachment, or as an image pointed to by a URL.

When a user issues a request to view an image, regardless of the physical or dimensional size of the image, the server resizes the image to match the requesting device display resolution, and reduces the number of colors to match the display capabilities of the mobile device. The server then returns the adjusted image to the device for viewing. This significantly reduces the amount of data sent over the bandwidth-constrained wireless network as well as minimizing device memory consumption and CPU usage required to display the image.

The mobile communication device incorporates Attachment Viewer and Browser client applications, both of which are known in the art but, according to the invention, are provided with additional functionality for allowing the images obtained by wireless downloading to be saved onto the device. One example of a suitable Browser client application is set forth in EP 1 107 131 (Research In Motion Limited), entitled VIRTUAL MACHINE WEB BROWSER. The saved images can be reuses later by other device applications such as image viewers, screensavers or background screen images. This eliminates the need to have the images preprocessed by a PC application and transferred onto the device from a desktop computer via a wired or close proximity wireless synchronization operation.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:
Figure 1 is a block diagram of a network environment in which the preferred embodiment may be practiced;
Figure 2 is a screen display of a menu for saving an image in an Attachment Viewer Image Control Application of the mobile communication device, according to the preferred embodiment;
Figure 3 is a screen display of a menu for saving an image in a Browser Application of the mobile communication device, according to the preferred embodiment;
Figure 4 is a screen display of a menu for using a saved image in a Pictures Application of the mobile communication device, according to the preferred embodiment;
Figure 5 is a flowchart showing client side functionality for viewing and saving images on the mobile communication device, according to the preferred embodiment;
Figure 6 is a flowchart showing server side functionality for viewing and saving images on the mobile communication device, according to the preferred embodiment; and
Figure 7 is a flowchart showing client side functionality for using a saved image in a Pictures Application on the mobile communication device, according to the preferred embodiment.

### Detailed Description of the Preferred Embodiment

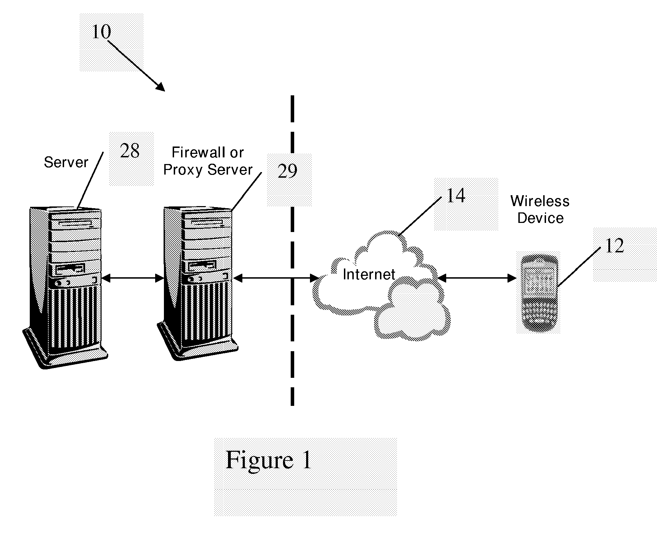

With reference to Figure 1, network environment 10 is shown in which the preferred embodiment may be practiced. Network environment 10 includes at least one mobile communication device 12 communicating via a wireless network/Internet 14 to a server 28, via a firewall security server 29, for downloading document attachments to the mobile communication device 12. While only one server 28 is shown, for illustration purposes, a person of skill in the art will understand that network environment 10 could have many such servers for hosting web sites or graphic download sites, providing access to picture files such as JPEG, TIFF, BMP, PNG, SGI, MP4, MOV, GIF, SVG, etc. As would be understood by one of ordinary skill in the art, wireless networks 14 include GSM/GPRS, CDPD, TDMA, iDEN Mobitex, DataTAC networks, or future networks such as EDGE or UMTS, and broadband networks like Bluetooth and variants of 802.11.

As discussed above, when the user of a mobile communication device 12 views an image attachment using an "Attachment Viewer" application, a server side resized version of the original image is downloaded to the device (unless the original image has a smaller width and height than the requesting device screen size). The server 28 resizes the image to be viewed based on the requesting device screen width and height (in pixels).

Details of how the image is delivered from the server 28 to the device 12 do not form part of the invention. Suitable content delivery systems are set forth, for example, in published international patent application publication no. WO 02/077855 (Arizan Corporation) entitled SYSTEMS AND METHODS FOR CONTENT DELIVERY OVER A WRELESS COMMUNICATION MEDIUM TO A PORTABLE COMPUTING DEVICE, and published international patent application publication no. WO 02/076058 (Research In Motion Limited) entitled METHOD AND APPARATUS FOR PROVIDING CONTENT DELIVERY TO MEDIA DEVICES.

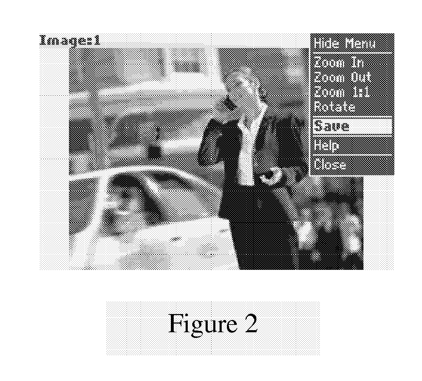

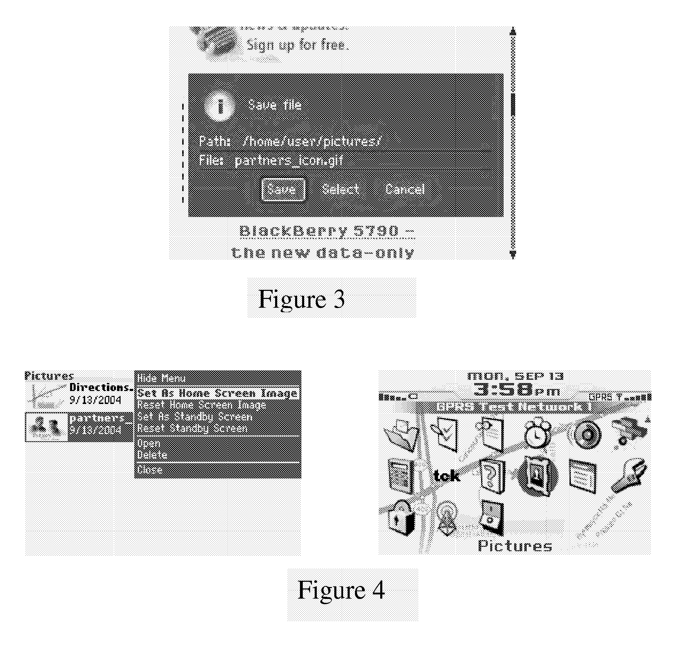

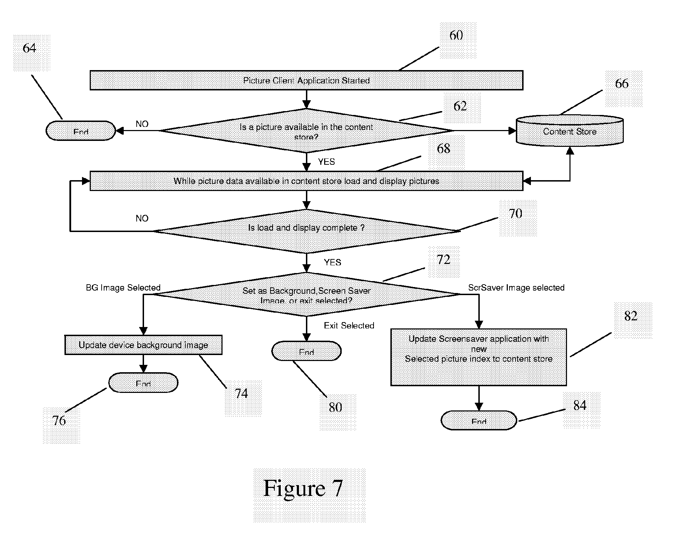

Turning to the screen display of Figure 2, the "Save" command permits a user to save viewed image attachments from the Attachment Viewer to memory on the mobile communication device 12 (i.e. the device content store). Later, the user can choose the "Pictures" application to select a saved image to be used as a "Standby" screen or "Background" image, as discussed in greater detail below with reference to Figures 4 and 7. The images are saved in JPEG format to the content store of the device 12.

With reference to Figure 3, the "Save" command may also be executed from a device Browser application, to save the viewed image previously retrieved by the corresponding URL in the device content store, preferably in JPEG format, although other suitable formats may be used such as PNG, GIF and WBMP. A user can then launch the "Pictures" application to view all pictures from the content store and select one to be used as a "Standby" screen or "Background" image.

In Figure 4, a screen display for a "Pictures" application is shown with a menu for reading and displaying images stored in the device content store. The user can browse all of the saved images in the content store and select a specific image to be used as a "Standby" screen or "Background" image on the device, as indicated above.

Thus, device side applications that communicate over a wireless network are able to view, save and reuse images viewed on the device, either in the form of an image attachment or as part of a request for a web page URL where the image appears as part of the HTML or WML page or directly as an image URL.

Appropriate server side functionality is also provided, either through handling the request by an Attachment Server (AS) or by a Mobile Data Service (MDS), described in greater detail below, to resize the requested images for viewing to fit the requesting device screen thereby minimizing bandwidth and device storage.

With respect to the device side applications, upon startup, the mobile communication device 12 reads the content store and an appropriate device code component that is responsible for drawing the background image for the device main screen reads the selected image for background bitmap usage. The device screensaver application also loads the corresponding image selected to be used as screen saver image (i.e. invoked after the device has been idle for a specified amount of time).

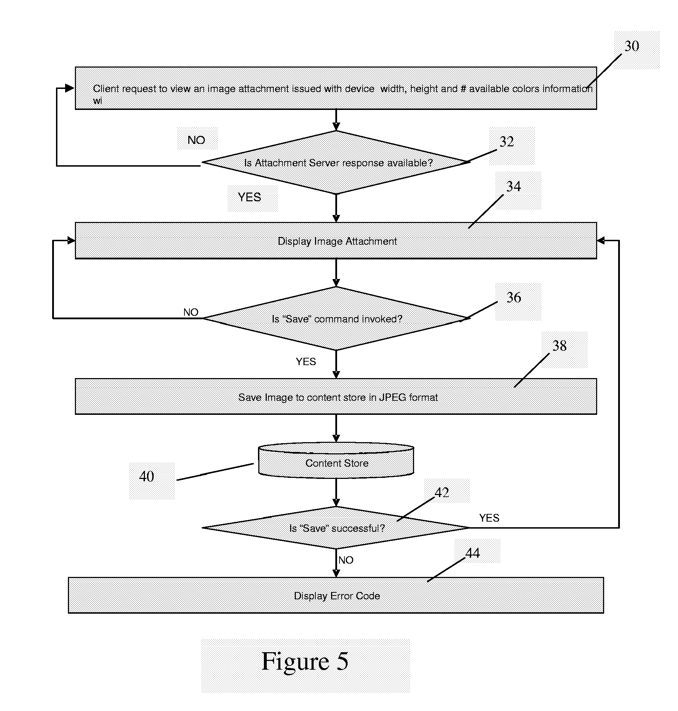

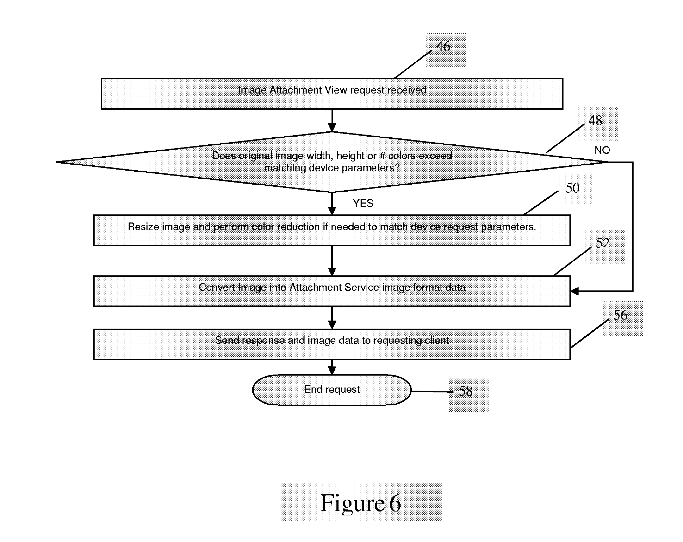

Turning to Figures 5 and 6, flowcharts are provided of the client 12 and server 28 side applications, respectively, for requesting an image from the server and storing the image on the device. As discussed above, the Attachment Viewer component on the mobile communication device 12 allows a user to issue a request to the corresponding server side component, namely the Attachment Server, for viewing an image file that is attached to an email message (step 30). The request for viewing the image attachment contains device specific information relating to screen display capabilities in terms of screen width, height and number of colors used for display.

Upon receiving such a request (step 46), the Attachment Server records the requesting device information and compares this information with the width, height and number of colors parameters of the original image information (step 48).

If the original image width, height and number of colors used all are equal to or less than the parameters specified in the device request, then the Attachment Server simply returns the original image to the device in the appropriate Attachment Server specific format (step 52).

However, in the event any of the original image width, height or number of colors is greater than any of the equivalent requesting device characteristics then the Attachment Server performs an image resize operation (step 50), including color reduction if the number of colors of the original image exceeds the available number of colors on the device 12. The resized image is then returned (step 56) to the requesting client (Attachment Viewer) in the appropriate Attachment Server specific format for display to the user (step 34). That marks the end of the server side process (step 58).

Upon successful receipt of the image at the device 12, the menu prompt of Figure 2 (or Figure 3) is generated thereby providing the user with the opportunity to save the image (step 36). This "Save" functionality is achieved by the implementation of a common device side function that allows a viewed image with data in JPEG form (PNG, GIF, WBMP, etc.) to be persisted (i.e. saved) to the common device side content store (step 38). Upon a successful invocation of the "Save" function (step 42), the image data is saved to the content store (40) and process control returns to step 34 (i.e. continued display of the image via the Attachment Viewer).

On the other hand, if the "Save" operation fails (step 42), and error code is displayed at the device 12 (step 44).

The Browser component on the mobile communication device 12 allows the user to view an image that is part of an HTML or WML file, or directly pointed to by an URL. When the user views an image in this fashion, the Browser device client receives rendering data by a corresponding server side, referred to above and identified as the Mobile Data Service (MDS). The request for viewing the image is interpreted by the server side component when parsing the HTML, WML or Image URL and is trans-coded into the appropriate device specific format to be parsed by the browser. More particularly, in every request for content, the Browser includes a header that identifies the Browser's capabilities (in particular, screen size and colour depth). The MDS then uses this information, in the case of image trans-coding, to resize and colour-reduce each image (if the original images size or colour-depth exceed those of the device) if necessary, before sending the trans-coded image to the device.

Figure 7 is a flowchart depicting step-by-step functionality of the image "View" and "Save" operations implemented via the device browser client.

The Picture application component (Figure 4) on mobile communication device 12 allows the user to browse images that have been persisted (i.e. saved) to the content store by other applications running on the wireless device. Furthermore, this application allows the user to select an individual image from the content store for use either as a screen saver or background image as part of the generic OS runtime functionality.

Through the use of the generic content store (40), the Attachment Viewer, Browser, any other specification conforming application offer a common save functionality that allows other applications to load and reuse the images in any desired manner.

In operation, the Picture client application is started (step 60), and a determination is made (step 62) as to whether or not a picture is available in the content store (40), for display at the device 12. As discussed above, upon startup, the mobile communication device 12 reads the content store and an appropriate device code component reads the selected images for display.

If no image is available, the process terminates (step 64). Otherwise, the image data is retrieved from the content store (step 68) and displayed. Once the image data load is complete (step 70), the image may be set by the user as Background, Screen Saver, etc. (step 72), or the user may simply exit from the menu (step 80). If the image is selected as "Background", the device 12 updates the background image (step 74) and the process terminates (step 76). If the image is selected as a "Screen Saver", the device screen saver application is updated with the new image (step 82), and the process thereafter terminates (step 84).

In summary, the ability to view, save and reuse server scaled and color reduced images matching the requesting device (received either as email attachments or URLs) allows users to quickly retrieve even large images in such a fashion that device memory/CPU consumption, and request/response latency is minimized.

Furthermore, by allowing the requested image to be saved onto the device 12 for use by other device applications such as picture viewers, screensavers, and background image settings, there is no need for the user to preprocess the images in a desktop application in order to match the device screen/color characteristics. Likewise, there is no need for performing a manual wired or close proximity wireless synchronization operation to download the image onto the device.

A person skilled in the art, having read this description of the preferred embodiment, may conceive of variations and alternative embodiments. For example, screen saver images may be selected by a user at a PC, uploaded to a service such as http://www.terratial.com/, which then downloads a screen saver application that can be loaded onto the device 12.

All such variations and alternative embodiments are believed to be within the ambit of the claims appended hereto.

## Claims

1. A process for scaling and viewing a server stored image on a mobile communication device, and saving the image for reuse by applications on said mobile communication device, comprising:
transmitting a request from said mobile communication device to said server for viewing said image, said request including device specific information relating to screen display capabilities of said mobile communication device;
comparing said device specific information with corresponding information relating to said image and, in the event resolution of said image exceeds said screen display capabilities then modifying characteristics of said image for conformance with said device specific information;
downloading said image from said server to said mobile communication device for display; and
saving said image for use by an application on said mobile communication device.

2. The process of claim 1, further comprising generating a menu prompt at said device for saving said image to a content store in said device.

3. The process of claim 2, wherein said image is saved in JPEG format in said content store.

4. The process of any one of claims 1 to 3, wherein said image forms any of a part of a request for a web page URL, a part of an HTML page, a part of a WML page or an image URL.

5. The process of any one of claims 1 to 4, wherein said device specific information includes at least one of screen width, height and number of colors capable of display on said mobile communication device, and said server performs an image resize operation in the event any of said screen width or height is less than corresponding information relating to said image.

6. The process of claim 5, wherein said server reduces the number of colors in said image in the event the number of colors in said image exceeds the number of colors capable of display on said mobile communication device.

7. The process of any one of claims 1 to 6, wherein said menu prompt is generated via one of an attachment viewer or browser running on said mobile communication device.

8. The process of claim 7, wherein said browser allows said user to view said image from a web file, and wherein said server parses said web file and trans-code said image into a format capable of being parsed by the browser.

9. The process of any one of claims 1 to 8, further comprising retrieving said image from said content store for use as one of either a screen saver or background image.

10. A server process comprising:
receiving a request for viewing an image, said request including device specific information including screen display capabilities of a device making the request;
comparing said device specific information with corresponding information relating to said image and, in the event resolution of said image exceeds said screen display capabilities then modifying characteristics of said image for conformance with said device specific information; and
downloading said image with modified characteristics for display on said device.

11. The server process of claim 10, wherein said image forms any of a part of a request for a web page URL, a part of an HTML page, a part of a WML page or an image URL.

12. The server process of claim 10 or claim 11, wherein said device specific information includes at least one of screen width, height and number of colors capable of display.

13. The server process of claim 12, wherein said server performs an image resize operation in the event any of said screen width or height is less than corresponding information relating to said image.

14. The server process of claim 13, wherein said server reduces the number of colors in said image in the event the number of colors in said image exceeds the number of colors capable of display as indicated by said device specific information.

15. A mobile communication device process comprising:
transmitting a request for viewing an image, said request including device specific information relating to screen display capabilities of said mobile communication device;
downloading and displaying said image with modified characteristics for conformance with said device specific information;
generating a menu prompt for saving said image; and
in the event of user selection of said prompt saving said image for use by an imaging application on said mobile communication device.

16. The mobile communication device process of claim 15, wherein said image is saved in JPEG format.

17. The mobile communication device process of claim 15 or claim 16, wherein said image forms any of a part of a request for a web page URL, a part of an HTML page, a part of a WML page or an image URL.

18. The mobile communication device process of any one of claims 15 to 17, wherein said device specific information includes at least one of screen width, height and number of colors capable of display on said mobile communication device.

19. The mobile communication device process of any one of claims 15 to 18, wherein said menu prompt is generated via one of an attachment viewer or browser running on said mobile communication device.

20. The mobile communication device process of claim 19, wherein said browser allows said user to view said image from a web file, and wherein said server parses said web file and trans-code said image into a format capable of being parsed by the browser.

21. A server comprising:
means for receiving a request for viewing an image, said request including device specific information including screen display capabilities of a device making the request;
means for comparing said device specific information with corresponding information relating to said image;
means for modifying characteristics of said image for conformance with said device specific information in the event resolution of said image exceeds said screen display capabilities; and
means for downloading said image with modified characteristics for display on said device.

22. Computer code embodied on a machine readable medium of the server of claim 21, said code being executable on a processor of said server for implementing the method of any of claims 10 to 14.

23. A mobile communications device comprising:
means for transmitting a request for viewing an image, said request including device specific information relating to screen display capabilities of said mobile communication device;
means for downloading and displaying said image with modified characteristics for conformance with said device specific information;
means for generating a menu prompt for saving said image; and
means for saving said image for use by an imaging application on said mobile communication device in the event of user selection of said prompt.

24. Computer code embodied on a machine readable medium of the mobile communications device of claim 23, said code being executable on a processor of said device for implementing the method of any of claims 15 to 20.

## Amended claims

### Amended claims in accordance with Rule 86(2) EPC.

**1.** A process for modifying a server stored image and viewing said image on a mobile communication device (12), and saving the image for reuse by applications on said mobile communication device (12), comprising:
transmitting a request from said mobile communication device (12) to said server (28) for viewing said image, said request comprising device specific information relating to screen display capabilities of said mobile communication device;
at said server (28), comparing said device specific information with corresponding information relating to said image and, in the event resolution of said image exceeds said screen display capabilities then modifying characteristics of said image for conformance with said device specific information;
downloading said image from said server (28) to said mobile communication device (12) for display; and
saving said image for use by an application on said mobile communication device (12).

**2.** The process of claim 1, further comprising generating a menu prompt at said device (12)to enable a user of the device (12) to select a command for controlling the device (12) to save said image to a content store in said device.

**3.** The process of claim 2, wherein said image is saved in any of JPEG, PNG, GIF or WBMP formats in said content store.

**4.** The process of any one of claims 1 to 3, wherein said image forms any of: a part of a request for a web page URL; a part of an HTML page; a part of a WML page; or an image URL.

**5.** The process of any one of claims 1 to 3, wherein said image comprises an attachment to an email message stored on an attachment server (28).

**6.** The process of any one of claims 1 to 5, wherein said device specific information comprises at least one of screen width, height and number of colours capable of display on said mobile communication device (12), and said server (28) performs an image resize operation in the event any of said screen width or height is less than corresponding information relating to said image.

**7.** The process of claim 6, wherein said server (28) reduces the number of colours in said image in the event the number of colours in said image exceeds the number of colours capable of display on said mobile communication device (12).

**8.** The process of claim 2 or claim 3, wherein said menu prompt is generated via one of an attachment viewer or a browser running on said mobile communication device (12).

**9.** The process of claim 8, wherein said browser allows said user to view said image from a web file, and wherein said server (28) parses said web file and trans-codes said image into a format capable of being parsed by the browser.

**10.** The process of any one of claims 1 to 9, further comprising retrieving said image from said content store for use as one of either a screen saver or background image.

**11.** A process in a server (28) of modifying an image stored in said server (28), comprising:
receiving a request for viewing said image from a mobile communication device (12), said request comprising device specific information relating to screen display capabilities of the mobile communication device (12);
comparing said device specific information with corresponding information relating to said image and, in the event resolution of said image exceeds said screen display capabilities then modifying characteristics of said image for conformance with said device specific information; and
downloading said image with modified characteristics to said device (12).

**12.** The process of claim 11, wherein said image forms any of: a part of a request for a web page URL; a part of an HTML page; a part of a WML page; or an image URL.

**13.** The process of claim 11, wherein said image comprises an attachment to an email message stored and said server comprises an attachment server (28) storing said email message.

**14.** The process of any one of claims 11 to 13, wherein said device specific information comprises at least one of screen width, height and number of colours capable of display.

**15.** The process of claim 14, wherein said server (28) performs an image resize operation in the event any of said screen width or height is less than corresponding information relating to said image.

**16.** The process of claim 15, wherein said server (28) reduces the number of colours in said image in the event the number of colours in said image exceeds the number of colours capable of display as indicated by said device specific information.

**17.** A process of viewing a server stored image on a mobile communication device (12) and saving the image for reuse by applications on said mobile communication device (12), comprising:
transmitting a request for viewing said image to a server (28), said request comprising device specific information relating to screen display capabilities of said mobile communication device (12);
downloading said image for display on said mobile communication device (12) from said server (28), characteristics of said image having been modified in said server (28) for conformance with said device specific information;
generating a menu prompt to enable a user of the device (12) to select a command for controlling the device (12) to save said image in said device (12); and
in the event of user selection of said prompt, saving said image for use by an imaging application on said mobile communication device (12).

**18.** The process of claim 17, wherein said image is saved in any of JPEG, PNG, GIF or WBMP formats.

**19.** The process of claim 17 or claim 18, wherein said image forms any of: a part of a request for a web page URL; a part of an HTML page; a part of a WML page; or an image URL.

**20.** The process of claim 17 or claim 18, wherein said image comprises an attachment to an email message stored on an attachment server (28)

**21.** The process of any one of claims 17 to 20, wherein said device specific information comprises at least one of screen width, height and number of colours capable of display on said mobile communication device.

**22.** The process of any one of claims 17 to 21, wherein said menu prompt is generated via one of an attachment viewer or a browser running on said mobile communication device (12).

**23.** The process of claim 22, wherein said browser allows said user to view said image from a web file, and wherein said server (28) parses said web file and trans-codes said image into a format capable of being parsed by the browser.

**24.** A server (28) comprising:
means for receiving a request for viewing said image from a mobile communication device (12), said request comprising device specific information relating to screen display capabilities of said mobile communication device (12);
means for comparing said device specific information with corresponding information relating to said image;
means for modifying characteristics of said image for conformance with said device specific information in the event resolution of said image exceeds said screen display capabilities; and
means for downloading said image with modified characteristics to said device (12).

**25.** Computer code embodied on a machine readable medium of the server (28) of claim 24, said code being executable on a processor of said server (28) for implementing the method of any one of claims 11 to 16.

**26.** A mobile communication device (12) comprising:
means for transmitting a request for viewing said image to a server (12), said request comprising device specific information relating to screen display capabilities of said mobile communication device (12);
means for downloading said image for display on said mobile communication device (12) from said server (28), characteristics of said image having been modified in said server (28) for conformance with said device specific information;
means for generating a menu prompt to enable a user of the device (12) to select a command for controlling the device (12) to save said image in said device (12); and
means for saving said image for use by an imaging application on said mobile communication device (12) in the event of user selection of said prompt.

**27.** Computer code embodied on a machine readable medium of the mobile communication device (12) of claim 26, said code being executable on a processor of said device (12) for implementing the method of any of claims 17 to 23.
